# EUROPÄISCHE PATENTANMELDUNG

(11) **EP 2 826 671 A1**
(43) Veröffentlichungstag der Anmeldung: **21.01.2015**
(21) Anmeldenummer: 13003828.4
(22) Anmeldetag: 01.08.2013
(51) Int. Cl.: B60Q 7/00, G09F 13/16, G08G 1/0955, G08G 1/00

(54) **Warndreieck-Vorrichtung**

(30) Priorität: 18.07.2013 DE 102013107658
(71) Anmelder: Fietkau, Jürgen, 89075 Ulm (DE); Borst, Matthias, 89075 Ulm (DE)
(72) Erfinder: Fietkau, Jürgen, 89075 Ulm (DE); Borst, Matthias, 89075 Ulm (DE)
(74) Vertreter: Kiessling, Christian

(57) **Zusammenfassung**

Eine Warndreieck-Vorrichtung (100) mit einer an einem Chassis (110) angebrachten Oberfläche (112) zur Aufnahme einer grafischen Gestaltung eines Warndreiecks gemäß einer Vorgabe der STVO, mittels derer Information bezüglich einer notwendig gewordenen Assistenz automatisiert an entfernte Informationsempfänger abgebbar ist, wird dadurch geschaffen, dass in dem Chassis (110) ein Impuls-Sensor (130) zum Sensieren eines Auffahrens eines zweiten Kraftfahrzeuges auf ein erstes Kraftfahrzeug sowie eine eine jeweils aktuelle geografische Position ermittelnde GPS-Einheit (140) zusammen mit einer Sendeeinheit (150) und einer die Sendeeinheit (150) treibenden elektronischen Steuerungseinrichtung (151) untergebracht ist, die ausgelegt ist, um mit Hilfe von Signalen des Impuls-Sensors (130) die Sendeeinheit (150) bei Feststellen einer Auffahrt eines zweiten Kraftfahrzeuges auf ein erstes Kraftfahrzeug ein Aussenden von Daten bezüglich einer aktuellen geografischen Position zu aktivieren.

## Beschreibung

Die Erfindung betrifft eine Warndreieck-Vorrichtung mit einer an einem Chassis angebrachten Oberfläche zur Aufnahme einer grafischen Gestaltung eines Warndreiecks gemäß einer Vorgabe der STVO.

Warndreieck-Vorrichtungen der eingangs genannten Art sind im Stand der Technik seit langem bekannt und werden zur Markierung auf öffentlichen Straßen liegengebliebener oder in einen Unfall verwickelter Fahrzeuge verwendet.

Die bekannten Warndreieck-Vorrichtungen weisen indes eine Reihe praktischer Nachteile auf. So ist zum einen eine Erkennbarkeit bei Dämmerung und Dunkelheit nur unzureichend, da lediglich passiv leuchtende, als Katzenaugen bezeichnete Reflektionselemente Verwendung finden, die eine Lichtremission nur bei auftreffendem Scheinwerferlicht bewirken. Insbesondere weisen die bekannten Warndreieck-Vorrichtungen indes den Nachteil auf, dass eine Assistenz betreffend eine medizinische Versorgung bei einem Unfall verletzter Fahrzeuginsassen oder betreffend eine technische Hilfestellung und im Falle eines Fahrzeugschadens und einer damit notwendig gewordenen Fahrzeugreparatur vor Ort nicht vorgesehen ist.

Aufgabe der Erfindung ist es deshalb, eine Warndreieck-Vorrichtung zu schaffen, mit der Information bezüglich einer notwendig gewordenen Assistenz automatisiert an entfernte Informationsempfänger abgebbar ist und deren passive Sicherheit durch verbesserte Erkennbarkeit bei Dämmerung und Dunkelheit gegenüber den bekannten Warndreieck-Vorrichtungen erhöht ist.

Für eine Warndreieck-Vorrichtung der eingangs genannten Art wird diese Aufgabe erfindungsgemäß dadurch gelöst, dass in dem Chassis ein Impuls-Sensor zum Sensieren eines Auffahrens eines zweiten Kraftfahrzeuges auf ein erstes Kraftfahrzeug sowie eine eine jeweils aktuelle geografische Position ermittelnde GPS-Einheit zusammen mit einer Sendeeinheit und einer die Sendeeinheit treibenden elektronischen Steuerungseinrichtung untergebracht ist, die ausgelegt ist, um mit Hilfe von Signalen des Impuls-Sensors die Sendeeinheit bei Feststellen einer Auffahrt eines zweiten Kraftfahrzeuges auf ein erstes Kraftfahrzeug ein Aussenden von Daten bezüglich einer aktuellen geografischen Position zu aktivieren.

Bevorzugte Ausführungsformen der Erfindung sind Gegenstand der Unteransprüche.

Bei der erfindungsgemäßen Warndreieck-Vorrichtung wird durch die Merkmalskombination, dass in dem Chassis ein Impuls-Sensor zum Sensieren eines Auffahrens eines zweiten Kraftfahrzeuges auf ein erstes Kraftfahrzeug sowie eine eine jeweils aktuelle geografische Position ermittelnde GPS-Einheit zusammen mit einer Sendeeinheit und einer die Sendeeinheit treibenden elektronischen Steuerungseinrichtung untergebracht ist, die ausgelegt ist, um mit Hilfe von Signalen des Impuls-Sensors die Sendeeinheit bei Feststellen einer Auffahrt eines zweiten Kraftfahrzeuges auf ein erstes Kraftfahrzeug ein Aussenden von Daten bezüglich einer aktuellen geografischen Position zu aktivieren, erreicht, dass örtliche und zeitliche Information bezüglich einer durch Unfall bzw. Auffahrt-Schocks-Auslösung notwendig gewordenen medizinischen und/ oder technischen Assistenz automatisiert an entfernte Informationsempfänger abgebbar ist und somit ein rascher und von einem durch Unfall möglicherweise beeinträchtigten physischen und psychischen Zustand eines Fahrzeuginsassen unabhängiger Notruf automatisiert absetzbar ist.

Gemäß einer ersten bevorzugten Ausführungsform der erfindungsgemäßen Warndreieck-Vorrichtung ist vorgesehen, dass zusätzlich ein manuell betätigbarer Schalter vorgesehen ist, dessen Aktivierung ein Aussenden von mittels der GPS-Einheit ermittelten Daten bezüglich einer aktuellen geografischen Position bewirkt.

Die in dem Chassis befindlichen elektrischen und elektronischen Einheiten sind dabei zum Zweck einer Versorgung vorzugsweise mit elektrischem Strom mit einem in dem Chassis untergebrachten elektrischen Akku verbunden, um eine sichere Stromversorgung sicherzustellen. Der Akku ist dabei vorzugsweise ausgelegt, um einen Ladevorgang über die Lichtmaschine eines Kraftfahrzeuges zu ermöglichen.

Der Akku ist des Weiteren vorzugsweise mit aus dem Chassis herausgeführten elektrischen Kontaktelementen versehen, um an einem herkömmlichen elektrischen Adapter der Lichtmaschine eines Kraftfahrzeuges aufladbar zu sein.

Gemäß einer anderen bevorzugten Ausführungsform der erfindungsgemäßen Warndreieck-Vorrichtung ist vorgesehen, dass die Sendeeinheit ausgelegt ist, um einen die geografische Position enthaltenden automatisierten Notruf gemäß dem GSM Standard abzugeben. Die Sendeeinheit ist dabei vorzugsweise mit einer Speichereinheit zum Speichern vorherbestimmter Nachrichten und mit einer Speichereinheit zum Speichern von Telefonnummern vorherbestimmter Teilnehmer verbunden und ausgelegt, um in dem GSM Standard einen die geografische Position enthaltenden automatisierten Notruf an eine oder mehr der gespeicherte Telefonnummern abzugeben.

In der Speichereinheit sind vorzugsweise die Telefonnummern 112 sowie des ADAC, regionaler Notdienste sowie von Pannendiensten der Premium-Automarken gespeichert.

Gemäß einer weiteren bevorzugten Ausführungsform der erfindungsgemäßen Warndreieck-Vorrichtung ist in dem Chassis des Weiteren ein Mobiltelefon untergebracht, wobei das Chassis vorzugsweise im Bereich zumindest einer seiner Außenflächen mit einem Mikrofon, einem Außenlautsprecher sowie einer Tastatur für Zahlen und Buchstaben versehen ist, um eine bidirektionale Telefonverbindung zu ermöglichen.

Gemäß einer wichtigen bevorzugten Ausführungsform der erfindungsgemäßen Warndreieck-Vorrichtung ist vorgesehen, dass im Bereich zumindest eines Teils der grafischen Gestaltung der Oberfläche des Chassis mit dem Akku verbindbare LED-Leuchtelemente vorgesehen sind. Dadurch wird erreicht, dass die Helligkeit aller oder zumindest wesentlicher Bestandteile der grafischen Gestaltung eines Warndreieckes bei Dämmerung und Dunkelheit wesentlich erhöht wird. Dadurch wird eine deutliche Verbesserung der optischen Wahrnehmung des Warndreieckes seitens der Verkehrsteilnehmer erreicht.

Im Bereich der Oberfläche des Chassis ist vorzugsweise ein einen Helligkeitswert des ambienten Tageslichtes sensierender Lichtsensor vorgesehen, der mit einer elektronischen Steuerschaltung zum Ein- und Ausschalten sowie zum Regeln einer Helligkeit der LED-Leuchtelemente verbunden ist.

Die Steuerschaltung ist zum einen vorzugsweise ausgelegt, um bei Unterschreiten eines in einer elektronischen Speichereinheit gespeicherten vorgebbaren Helligkeitswertes des ambienten Tageslichtes einen Einschaltvorgang der LED-Leuchtelemente auszulösen und bei Überschreiten des vorgebbaren Helligkeitswertes des ambienten Tageslichtes einen Ausschaltvorgang der LED-Leuchtelemente zu bewirken.

Zum anderen ist die Steuerschaltung vorzugsweise ausgelegt, um bei Unterschreiten mindestens eines weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu erhöhen und bei Überschreiten mindestens eines anderen weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu mindern.

Eine Oberflächeseite des Chassis der erfindungsgemäßen Warndreieck-Vorrichtung ist vorzugsweise zur Aufnahme einer farblichen Gestaltung eines Warndreiecks gemäß Vorgabe der STVO ausgelegt, wobei die LED-Leuchtelemente im Bereich eines betreffenden roten Dreiecks angeordnet sind. Die LED-Leuchtelemente senden dabei gemäß bevorzugten Ausführungsformen Licht mit einer Farbe aus, die im Wesentlichen der Farbgebung der betreffenden Bereiche der farblichen Gestaltung der Oberfläche des Basispaneels entspricht.

Gemäß einer weiteren bevorzugten Ausführungsform der erfindungsgemäßen Warndreieck-Vorrichtung ist vorgesehen, dass eine Oberfläche des Chassis im Bereich der farblichen Gestaltung des Warndreiecks mit einer Mehrzahl von Aussparungen versehen ist und die Leuchtelemente im Bereich der Unterfläche des Basispaneels jeweils unterhalb einer Aussparung angeordnet sind, um in leuchtendem Zustand Licht durch die betreffende Aussparung zu senden.

Der Sensor zum Sensieren eines Auffahrt-Schocks kann gemäß einer Mehrzahl unterschiedlicher Ausführungsformen realisiert sein. Gemäß einer ersten bevorzugten Ausführungsform ist der Impuls-Sensor als elektronischer Sensor ausgeführt um auf ein entsprechendes, in einem Can-Bus übertragenes Signal eines in dem ersten Kraftfahrzeug vorgesehenen, auf kinetische Stöße reagierenden Schock-Sensors zu reagieren.

Gemäß einer zweiten bevorzugten Ausführungsform ist der Impuls-Sensor zum Sensieren eines Auffahrens eines zweiten Kraftfahrzeuges auf ein erstes Kraftfahrzeug ausgelegt, um auf ein entsprechendes Signal eines in dem ersten Kraftfahrzeug vorgesehenen, auf kinetische Stöße reagierenden Funk-Chips zu reagieren.

Der Impuls-Sensor zum Sensieren eines Auffahrens eines zweiten Kraftfahrzeuges auf ein erstes Kraftfahrzeug kann gemäß weiterer Ausführungsformen als Kraft- oder Verformungs-Sensor auf ein Erkennen an dem ersten Kraftfahrzeug auftretender kinetischer Impulse ausgerichtet sein, oder als optischer Sensor ausgeführt sein und auf ein optisches Erkennen mechanischer Verformungen von an dem ersten Kraftfahrzeug angebrachten Bauteilen ausgerichtet sein.

Um die Sicherheit für ein Sensieren eines Auffahrt-Schocks zu optimieren ist eine Kombination zweier oder mehr der obigen Ausführungsformen vorteilhaft.

Die erfindungsgemäße Warndreieck-Vorrichtung wird im Folgenden anhand einer bevorzugten Ausführungsform erläutert, die in den Figuren der Zeichnung dargestellt sind. Darin zeigen:
- Fig.1: eine erste bevorzugte Ausführungsform der erfindungsgemäßen Warndreieck-Vorrichtung in einer Ansicht von vorne;
- Fig.2: die in Figur 1 dargestellte bevorzugte Ausführungsform der erfindungsgemäßen Warndreieck-Vorrichtung in einer Ansicht von hinten.

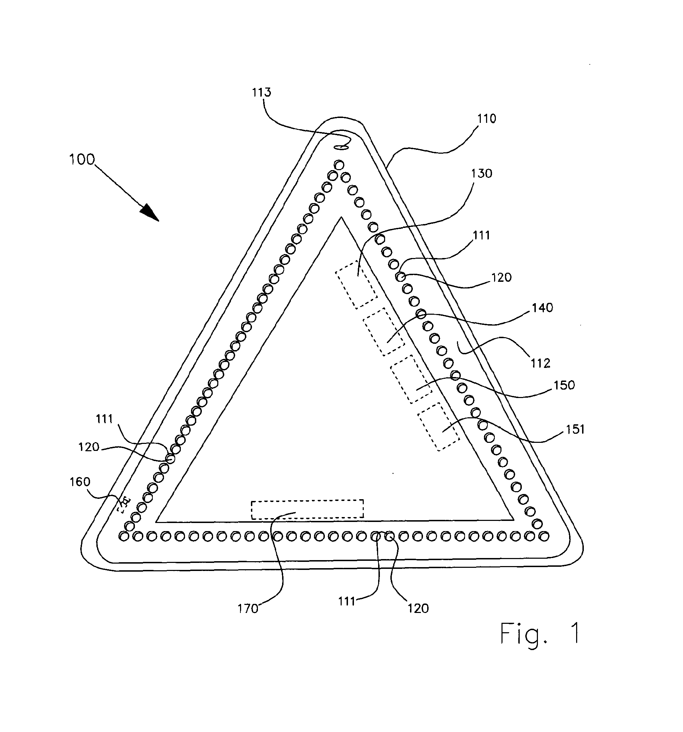

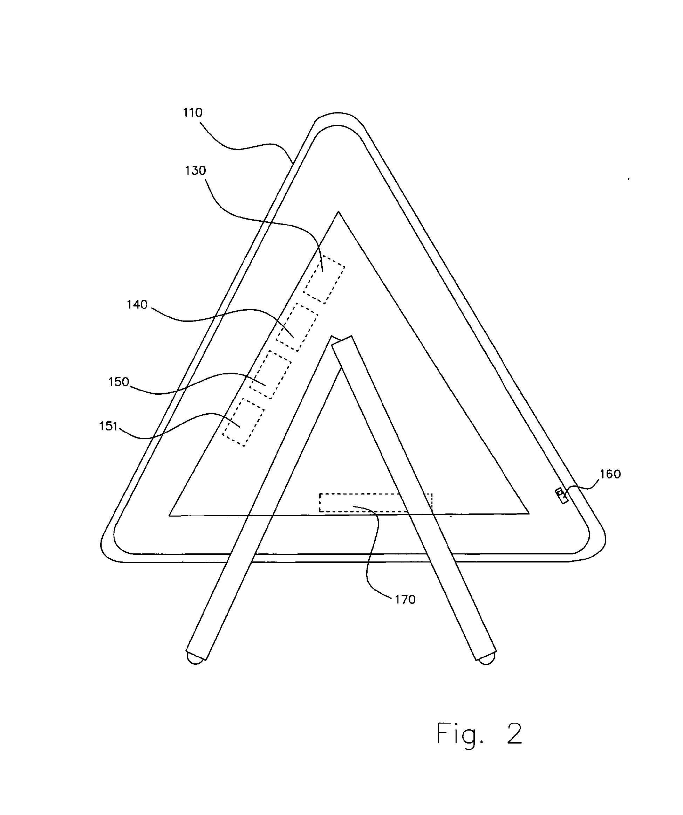

Die in den Figuren 1 und 2 dargestellte erfindungsgemäße Warndreieck-Vorrichtung 100 weist eine an einem Chassis 110 angebrachte Oberfläche 112 zur Aufnahme einer grafischen Gestaltung eines Warndreiecks gemäß einer Vorgabe der STVO auf, wobei in dem Chassis 110 ein Empfänger zum Empfangen eines Signals eines Impuls-Sensors 130 zum Sensieren einer Auffahrt eines zweiten Kraftfahrzeuges auf ein erstes Kraftfahrzeug untergebracht ist.

In dem Chassis 110 ist des Weiteren eine eine jeweils aktuelle geografische Position ermittelnde GPS-Einheit 140 zusammen mit einer Sendeeinheit 150 und einer die Sendeeinheit 150 treibenden elektronischen Steuerungseinrichtung 151 untergebracht, wobei letztere ausgelegt ist, um mit Hilfe von Signalen des Impuls-Sensors 130 die Sendeeinheit 150 bei Feststellen einer Auffahrt eines zweiten Kraftfahrzeuges auf ein erstes Kraftfahrzeug ein Aussenden von Daten bezüglich einer aktuellen geografischen Position zu aktivieren.

Zusätzlich zu der Möglichkeit einer automatisierten Aktivierung der Sendeeinheit 150 ist ein manuell betätigbarer Schalter 160 vorgesehen, dessen Aktivierung ein Aussenden von mittels der GPS-Einheit 140 ermittelten Daten bezüglich einer aktuellen geografischen Position bewirkt.

Die in dem Chassis 110 befindlichen elektrischen und elektronischen Einheiten sind zum Zweck einer Versorgung mit elektrischem Strom mit einem in dem Chassis 110 untergebrachten elektrischen Akku 170 verbunden, der ausgelegt ist, um einen Ladevorgang über die Lichtmaschine eines Kraftfahrzeuges zu ermöglichen. Der Akku 170 ist dabei mit aus dem Chassis 110 herausgeführten elektrischen Kontaktelementen versehen, um an einem herkömmlichen elektrischen Adapter der Lichtmaschine eines Kraftfahrzeuges aufladbar zu sein.

Die Sendeeinheit 150 ist ausgelegt, um einen die geografische Position enthaltenden automatisierten Notruf gemäß dem GSM Standard abzugeben. Zu diesem Zweck ist die Sendeeinheit 150 mit einer Speichereinheit zum Speichern vorherbestimmter Nachrichten und mit einer Speichereinheit zum Speichern von Telefonnummern vorherbestimmter Teilnehmer des GSM Netzes verbunden und ausgerüstet, um in dem GSM Standard einen die geografische Position enthaltenden automatisierten Notruf an eine oder mehr der gespeicherte Telefonnummern abzugeben.

In der Speichereinheit sind dabei die Telefonnummern 112 sowie des ADAC, regionaler Notdienste sowie von Pannendiensten der Premium-Automarken gespeichert.

In dam Chassis 110 ist des Weiteren ein Mobiltelefon untergebracht, und das Chassis 110 ist im Bereich zumindest einer seiner Außenflächen mit einem Mikrofon, einem Außenlautsprecher sowie einer Tastatur für Zahlen und Buchstaben versehen, um zusätzlich eine personalisierte bidirektionale Telefonverbindung zu ermöglichen.

Im Bereich eines Teils der grafischen Gestaltung der Oberfläche 112 des Chassis 110 sind mit dem Akku 170 verbindbare LED-Leuchtelemente 120 vorgesehen.

Im Bereich der Oberfläche 112 des Chassis 110 ist ein einen Helligkeitswert des ambienten Tageslichtes sensierender Lichtsensor vorgesehen, der mit einer elektronischen Steuerschaltung zum Ein- und Ausschalten sowie zum Regeln einer Helligkeit der LED-Leuchtelemente 120 verbunden ist.

Die Steuerschaltung 151 ist dabei ausgelegt, um bei Unterschreiten eines in einer elektronischen Speichereinheit gespeicherten vorgebbaren Helligkeitswertes des ambienten Tageslichtes einen Einschaltvorgang der LED-Leuchtelemente 120 auszulösen und bei Überschreiten des vorgebbaren Helligkeitswertes des ambienten Tageslichtes einen Ausschaltvorgang der LED-Leuchtelemente 120 zu bewirken.

Des Weiteren ist die Steuerschaltung 151 ausgelegt ist, um bei Unterschreiten mindestens eines weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu erhöhen und bei Überschreiten mindestens eines anderen weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu mindern.

Eine Oberflächenseite 112 des Chassis 110 ist mit einer farblichen Gestaltung eines Warndreiecks gemäß Vorgabe der STVO versehen, wobei die LED-Leuchtelemente 120 im Bereich eines betreffenden roten Dreiecks angeordnet sind. Die LED-Leuchtelemente 120 senden dabei Licht mit roter Farbe aus, die im Wesentlichen der Farbgebung der betreffenden Bereiche der farblichen Gestaltung der Oberfläche 112 des Basispaneels entspricht.

Die mit einer farblichen Gestaltung eines Warndreiecks versehene Oberflächenseite 112 des Chassis 110 ist im Bereich der farblichen Gestaltung des Warndreiecks mit einer Mehrzahl von Aussparungen 111 versehen, wobei die Leuchtelemente 120 im Bereich der Unterfläche des Basispaneels jeweils unterhalb einer Aussparung 111 angeordnet sind, um in leuchtendem Zustand Licht durch die betreffende Aussparung 111 zu senden.

Ein erster Impuls-Sensor 130 zum Sensieren eines Auffahrens eines zweiten Kraftfahrzeuges auf ein erstes Kraftfahrzeug ist als Kraft-Sensor ausgeführt und auf ein Erkennen an dem ersten Kraftfahrzeug auftretender kinetischer Impulse ausgerichtet, und ein zweiter Impuls-Sensor ist als optischer Sensor ausgeführt und auf ein optisches Erkennen mechanischer Verformungen von an dem ersten Kraftfahrzeug angebrachten Bauteilen ausgerichtet.

Das oben erläuterte Aüsführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Warndreieck-Vorrichtung (100) mit einer an einem Chassis (110) angebrachten Oberfläche (112) zur Aufnahme einer grafischen Gestaltung eines Warndreiecks gemäß einer Vorgabe der STVO, **dadurch gekennzeichnet, dass** in dem Chassis (110) ein Impuls-Sensor (130) zum Sensieren eines Auffahrens eines zweiten Kraftfahrzeuges auf ein erstes Kraftfahrzeug sowie eine eine jeweils aktuelle geografische Position ermittelnde GPS-Einheit (140) zusammen mit einer Sendeeinheit (150) und einer die Sendeeinheit (150) treibenden elektronischen Steuerungseinrichtung (151) untergebracht ist, die ausgelegt ist, um mit Hilfe von Signalen des Impuls-Sensors (130) die Sendeeinheit (150) bei Feststellen einer Auffahrt eines zweiten Kraftfahrzeuges auf ein erstes Kraftfahrzeug ein Aussenden von Daten bezüglich einer aktuellen geografischen Position zu aktivieren.

2. Vorrichtung nach Anspruch 1, **dadurch gekennzeichnet, dass** zusätzlich ein manuell betätigbarer Schalter (160) vorgesehen ist, dessen Aktivierung ein Aussenden von seitens der GPS-Einheit (140) ermittelten Daten bezüglich einer aktuellen geografischen Position bewirkt.

3. Vorrichtung nach einem der Ansprüche 1 oder 2, **dadurch gekennzeichnet, dass** die in dem Chassis (110) befindlichen elektrischen und elektronischen Einheiten zum Zweck einer Versorgung mit elektrischem Strom mit einem in dem Chassis (110) untergebrachten elektrischen Akku (170) verbunden sind.

4. Vorrichtung nach Anspruch 3, **dadurch gekennzeichnet, dass** der Akku (170) ausgelegt ist, um einen Ladevorgang über die Lichtmaschine eines Kraftfahrzeuges zu ermöglichen.

5. Vorrichtung nach Anspruch 4, **dadurch gekennzeichnet, dass** der Akku (170) mit aus dem Chassis (110) herausgeführten elektrischen Kontaktelementen versehen ist, um an einem herkömmlichen elektrischen Adapter der Lichtmaschine eines Kraftfahrzeuges aufladbar zu sein.

6. Vorrichtung nach einem der vorhergehenden Ansprüche, **dadurch gekennzeichnet, dass** die Sendeeinheit (150) ausgelegt ist, um einen die geografische Position enthaltenden automatisierten Notruf gemäß dem GSM Standard abzugeben.

7. Vorrichtung nach Anspruch 6, **dadurch gekennzeichnet, dass** die Sendeeinheit (150) mit einer Speichereinheit zum Speichern vorherbestimmter Nachrichten und mit einer Speichereinheit zum Speichern von Telefonnummern vorherbestimmter Teilnehmer verbunden ist und ausgelegt ist, um in dem GSM Standard einen die geografische Position enthaltenden automatisierten Notruf an eine oder mehr der gespeicherten Telefonnummern abzugeben.

8. Vorrichtung nach Anspruch 7, **dadurch gekennzeichnet, dass** in der Speichereinheit die Telefonnummern 112 sowie des ADAC, regionaler Notdienste sowie von Pannendiensten der Premium-Automarken gespeichert sind.

9. Vorrichtung nach einem der vorhergehenden Ansprüche, **dadurch gekennzeichnet, dass** in dem Chassis (110) des Weiteren ein Mobiltelefon untergebracht ist und das Chassis (110) im Bereich zumindest einer seiner Außenflächen mit einem Mikrofon, einem Außenlautsprecher sowie einer Tastatur für Zahlen und Buchstaben versehen ist, um eine bidirektionale Telefonverbindung zu ermöglichen.

10. Vorrichtung nach einem der Ansprüche 3 bis 9, **dadurch gekennzeichnet, dass** im Bereich zumindest eines Teils der grafischen Gestaltung der Oberfläche (112) des Chassis (110) mit dem Akku (170) verbindbare LED-Leuchtelemente (120) vorgesehen sind.

11. Vorrichtung nach Anspruch 10, **dadurch gekennzeichnet, dass** im Bereich der Oberfläche (112) des Chassis (110) ein einen Helligkeitswert des ambienten Tageslichtes sensierender Lichtsensor (113) vorgesehen ist, der mit einer elektronischen Steuerschaltung (151) zum Ein- und Ausschalten sowie zum Regeln einer Helligkeit der LED-Leuchtelemente (120) verbunden ist.

12. Vorrichtung nach Anspruch 11, **dadurch gekennzeichnet, dass** die Steuerschaltung (151) ausgelegt ist, um bei Unterschreiten eines in einer elektronischen Speichereinheit gespeicherten vorgebbaren Helligkeitswertes des ambienten Tageslichtes einen Einschaltvorgang der LED-Leuchtelemente (120) auszulösen und bei Überschreiten des vorgebbaren Helligkeitswertes des ambienten Tageslichtes einen Ausschaltvorgang der LED-Leuchtelemente (120) zu bewirken.

13. Vorrichtung nach Anspruch 11, **dadurch gekennzeichnet, dass** die Steuerschaltung (151) des Weiteren ausgelegt ist, um bei Unterschreiten mindestens eines weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu erhöhen und bei Überschreiten mindestens eines anderen weiteren in der elektronischen Speichereinheit gespeicherten vorgebbaren Helligkeitswertes des ambienten Tageslichtes die Helligkeit gegenüber einer mit einem Einschaltvorgang verbundenen Grundhelligkeit zu mindern.

14. Vorrichtung nach einem der Ansprüche 10 bis 13, **dadurch gekennzeichnet, dass** eine Oberfläche (112) des Chassis (110) zur Aufnahme einer farblichen Gestaltung eines Warndreiecks gemäß Vorgabe der STVO ausgelegt ist, wobei die LED-Leuchtelemente (120) im Bereich eines betreffenden roten Dreiecks angeordnet sind.

15. Vorrichtung nach einem der Ansprüche 10 bis 14, **dadurch gekennzeichnet, dass** die LED-Leuchtelemente (120) Licht mit einer Farbe aussenden, die im Wesentlichen der Farbgebung der betreffenden Bereiche der farblichen Gestaltung der Oberfläche (112) des Basispaneels entspricht.

16. Vorrichtung nach einem der Ansprüche 10 bis 15, **dadurch gekennzeichnet, dass** eine Oberfläche (112) des Chassis (110) im Bereich der farblichen Gestaltung des Warndreiecks mit einer Mehrzahl von Aussparungen (111) versehen ist und die Leuchtelemente (120) im Bereich der Unterfläche des Basispaneels jeweils unterhalb einer Aussparung (111) angeordnet sind, um in leuchtendem Zustand Licht durch die betreffende Aussparung (111) zu senden.

17. Vorrichtung nach einem der vorhergehenden Ansprüche, **dadurch gekennzeichnet, dass** der Impuls-Sensor (130) zum Sensieren eines Auffahrens eines zweiten Kraftfahrzeuges auf ein erstes Kraftfahrzeug als elektronischer Sensor ausgeführt ist und auf ein entsprechendes, in einem Can-Bus übertragenes Signal eines in dem ersten Kraftfahrzeug vorgesehenen, auf kinetische Stöße reagierenden Schock-Sensors reagiert.

18. Vorrichtung nach einem der vorhergehenden Ansprüche, **dadurch gekennzeichnet, dass** der Impuls-Sensor (130) zum Sensieren eines Auffahrens eines zweiten Kraftfahrzeuges auf ein erstes Kraftfahrzeug auf ein entsprechendes Signal eines in dem ersten Kraftfahrzeug vorgesehenen, auf kinetische Stöße reagierenden Funk-Chips reagiert.

19. Vorrichtung nach einem der vorhergehenden Ansprüche, **dadurch gekennzeichnet, dass** der Impuls-Sensor (130) zum Sensieren eines Auffahrens eines zweiten Kraftfahrzeuges auf ein erstes Kraftfahrzeug als Kraft-Sensor ausgeführt ist und auf ein Erkennen an dem ersten Kraftfahrzeug auftretender kinetischer Impulse ausgerichtet ist.

20. Vorrichtung nach einem der vorhergehenden Ansprüche, **dadurch gekennzeichnet, dass** der Impuls-Sensor (130) zum Sensieren eines Auffahrens eines zweiten Kraftfahrzeuges auf ein erstes Kraftfahrzeug als optischer Sensor ausgeführt ist und auf ein optisches Erkennen mechanischer Verformungen von an dem ersten Kraftfahrzeug angebrachten Bauteilen ausgerichtet ist.
